# EUROPÄISCHE PATENTSCHRIFT

(11) **EP 1 924 630 B1**
(45) Veröffentlichungstag und Bekanntmachung des Hinweises auf die Patenterteilung: **11.03.2009**
(21) Anmeldenummer: 06819860.5
(22) Anmeldetag: 30.11.2006
(51) Int. Cl.: C08G 65/26, B01J 21/16, B01J 23/74, B01J 20/12

(54) **VERBESSERTER KATALYSATOR UND VERFAHREN ZUR POLYMERISATION CYCLISCHER ETHER**
IMPROVED CATALYST AND PROCESS FOR POLYMERIZING CYCLIC ETHERS
CATALYSEUR AMELIORE ET PROCEDE DE POLYMERISATION D' ETHER CYCLIQUE

(30) Priorität: 07.12.2005 DE 102005058416
(43) Veröffentlichungstag der Anmeldung: 28.05.2008
(73) Patentinhaber: BASF SE, 67056 Ludwigshafen (DE)
(72) Erfinder: HATSCHER, Stephan, 28857 Syke (DE); HESSE, Michael, 67549 Worms (DE); WABNITZ, Tobias, 68169 Mannheim (DE); KÄSHAMMER, Stefan, 67105 Schifferstadt (DE); PINKOS, Rolf, 67098 Bad Dürkheim (DE)
(86) Internationale Anmeldenummer: PCT/EP2006/069095
(87) Internationale Veröffentlichungsnummer: WO 2007/065838

(56) Entgegenhaltungen:
- EP-A1- 0 012 534
- EP-A1- 0 925 829
- DE-A1- 10 245 198
- US-A- 5 344 964
- SHRIGADI N B ET AL: "Study of catalytic activity of free and K10-supported iron oxyhydroxides and oxides in the Friedel-Crafts benzylation reaction using benzyl chloride/alcohol to understand their role in the catalysis by the Fe-exchanged/impregnated K10 catalysts" APPLIED CATALYSIS A: GENERAL, ELSEVIER SCIENCE, AMSTERDAM, NL, Bd. 252, Nr. 1, 8. Oktober 2003 (2003-10-08), Seiten 23-35, XP004463057 ISSN: 0926-860X
- DIAZ R ET AL: "SPECTROSCOPIC STUDY OF CUO/COO CATALYSTS SUPPORTED BY SI-AL-Y ZEOLITE MATRICES PREPARED BY TWO SOL-GEL METHODS" JOURNAL OF SOL-GEL SCIENCE AND TECHNOLOGY, SPRINGER, NEW YORK, NY, US, Bd. 17, Nr. 2, 1. Februar 2000 (2000-02-01), Seiten 137-144, XP001020297 ISSN: 0928-0707
- MISHRA T ET AL: "Transition metal oxide pillared clay: 5. Synthesis, characterisation and catalytic activity of iron-chromium mixed oxide pillared montmorillonite" APPLIED CATALYSIS A: GENERAL, ELSEVIER SCIENCE, AMSTERDAM, NL, Bd. 174, Nr. 1-2, 16. November 1998 (1998-11-16), Seiten 91-98, XP004271540 ISSN: 0926-860X

## Beschreibung

Die vorliegende Erfindung betrifft einen verbesserten Katalysator enthaltend eine Mischung mindestens eines säureaktivierten Schichtsilikats mit einem Übergangsmetalloxid der Gruppen 8 und/oder 9 des Periodensystem der Elemente sowie ein Verfahren zur Herstellung von Polytetrahydrofuran, Polytetrahydrofuran-Copolymeren, Diestern oder Monoestern dieser Polymere, bei dem Tetrahydrofuran in Gegenwart mindestens eines Telogens und/oder Comonomeren an einem solchen Katalysators polymerisiert wird

Polytetrahydrofuran (im folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es -wie auch manche seiner Derivate- in vielen Anwendungsfällen ein wertvoller Hilfsstoff, z.B. als Dispergiermittel oder beim Entfärben ("Deinken") von Altpapier.

PTHF wird technisch üblicherweise durch Polymerisation von Tetrahydrofuran (im folgenden "THF") an geeigneten Katalysatoren in Gegenwart von Reagenzien hergestellt, deren Zugabe die Steuerung der Kettenlänge der Polymerketten und so die Einstellung des mittleren Molekulargewichts ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z.B. durch Verwendung von Carbonsäuren oder Carbonsäureanhydriden als Telogene die Mono- oder Diester von PTHF hergestellt werden. Erst durch anschließende Verseifung oder Umesterung entsteht PTHF selbst. Daher wird diese Herstellung als zweistufiges PTHF-Verfahren bezeichnet.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden. Beispiele für solche Comonomere sind Telogene mit zwei Hydroxygruppen, wie die Dialkohole. Dies können beispielsweise Ethylenglykol, Propylenglykol, Butylenglykol, 1,3-Propandiol, 1,4-Butandiol, 2-Butin-1,4-diol, 2,2-Dimethyl-1,3-propandiol, 1,6-Hexandiol oder niedermolekulares PTHF sein.

Weiterhin sind als Comonomere cyclische Ether, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie z.B. 3-Methyltetrahydrofuran, 3,3-Dimethyltetrahydrofuran oder 3,4-Dimethyltetrahydrofuran geeignet.

Die Verwendung solcher Comonomere bzw. Telogene führt mit Ausnahme von Wasser, 1,4-Butandiol und niedermolekularem PTHF zur Herstellung von Tetrahydrofuran-Copolymeren - im folgenden THF-Copolymere genannt- und ermöglicht es auf diese Weise, PTHF chemisch zu modifizieren.

Technisch lässt sich PTHF einstufig durch THF-Polymerisation mit Wasser, 1,4-Butandiol oder niedermolekularem PTHF als Telogen an sauren Katalysatoren herstellen. Als Katalysatoren sind sowohl homogene, im Reaktionssystem gelöste Systeme als auch heterogene, d. h. weitgehend ungelöste Systeme, bekannt. Nachteilig sind jedoch die relativ geringen THF-Umsätze, die vor allem bei der Synthese von PTHF des Molekulargewichts 650 bis 3000 erreicht werden.

Großtechnisch werden überwiegend die oben erwähnten zweistufigen Verfahren durchgeführt, bei denen THF z.B. in Gegenwart von Fluorsulfonsäure zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt. Vorteilhaft ist vor allem die THF-Polymerisation in Gegenwart von Carbonsäureanhydriden, wie z.B. Acetanhydrid in Gegenwart saurer Katalysatoren zu PTHF-Diacetaten und die anschließende Umesterung der PTHF-Diacetate z.B. mit Methanol zu PTHF und Methylacetat.

Die in der Anmeldung bevorzugte Herstellung von PTHF durch THF-Polymerisation in Gegenwart von Carbonsäureanhydriden bzw. die Herstellung von THF-Copolymeren durch THF-Polymerisation in Gegenwart von Carbonsäureanhydriden und cyclischen Ethern als Comonomeren an sauren Tonmineralien ist bekannt.

So wird in der DE-A-28 01 578 wird ein Verfahren zur Herstellung von PTHF-Diacetaten aus THF in Gegenwart von Carbonsäureanhydriden und einer Bleicherde mit einem Wassergehalt < 3 Gew.-% als Katalysator beschrieben.

In der DE-A-198 01 462 werden säureaktivierte Calcium-Montmorillonite als Katalysatoren in Pulver- oder Strangform für die THF-Polymerisation zu u. a. PTHF-Diacetaten eingesetzt.

In der US 6,274,527 wird eine Katalysator auf Basis von säureaktiviertem algerischen Bentoniten offenbart. Der spezielle Rohton wird für bis zu 3 Tagen bei Raumtemperatur bzw. 1-2h bei erhöhten Temperaturen mit Schwefelsäure einer Konzentration von 0,1-0,9 mol/l aktiviert, filtriert, gewaschen und getrocknet.

Verfahren zur Herstellung von säureaktivierten Tonmineralien, insbesondere Schichtsilikaten, sind ebenfalls bekannt. Einen Überblick gibt die EP 398 636 und die darin zitierten Publikationen. Säureaktivierte Bentonite werden in großem Maßstab als Bleicherden zum Entfärben von Ölen eingesetzt.

Die Katalysatoren gemäß dem Stand der Technik zeigen eine nur relativ geringe Aktivität, was in einer technischen Anlage sehr große Reaktorvolumina und/oder sehr lange Reaktionszeiten bedingt. Die Wirtschaftlichkeit eines heterogen-katalysierten Verfahrens zur Polymerisation cyclischer Ether, insbesondere von THF, hängt daher entscheidend von der Produktivität des Katalysators ab. Der vorliegenden Erfindung lag daher die Aufgabe zugrunde, einen hochaktiven Katalysator für die Herstellung von Polytetrahydrofuran, Polytetrahydrofuran-Copolymeren, Diestern oder Monoestern dieser Polymere bereitzustellen.

Die Aufgabe wird erfindungsgemäß durch einen Katalysator enthaltend eine Mischung mindestens eines säureaktivierten Schichtsilikats mit einem Übergangsmetalloxid der Gruppen 8 und/oder 9 des Periodensystem der Elemente gelöst.

Als Übergangsmetalloxid der Gruppen 8 und/oder 9 (neue IUPAC Nomenklatur, Gruppe VIIIA nach alter Nomenklatur) des Periodensystems der Elemente sind insbesondere die Oxides des Cobalts und des Eisens, besonders bevorzugt Eisen(III)oxid und Cobalt(II, III)oxid (Co₃O₄) geeignet. Ganz besonders bevorzugt ist Eisen(III)oxid, das vor dem Einsatz gemäß DE-A 101 54 718 vorbehandelt wird, d.h. bei einer Temperatur von 700 bis 1200°C calciniert wurde. Ein ganz besonders geignetes Eisen(III)oxid wird unter dem Handelsnamen Typ HP (Hösch Premium) der FA Thyssen-Krupp vertrieben. Der erfindungsgemäße Katalysator enthält 0,5 bis 10 Gew.-%, bevorzugt 0,5 bis 5 Gew.-%, besonders bevorzugt 3 bis 4 Gew.-%. Eisen(III)oxid ist insbesondere bevorzugt in einer Menge von 0,5 oder 3 bis 4 Gew.-%, bezogen auf das Schichtsilikat enthalten. Cobalt(II,III)oxid ist bevorzugt in einer Menge von 0,5 bis 5 Gew.-%, bezogen auf das Schichtsilikat, enthalten.

Als säureaktiviertes Schichtsilikat können handelsübliche säureaktivierte Bleicherden zum Einsatz kommen. Beispiele hierfür sind aktivierte Tonmineralien der Montmorillonit-Saponit-Gruppe oder Palygorskit-Sepiolith-Gruppe, besonders bevorzugt Montmorillonite wie sie beispielsweise in Klockmanns Lehrbuch der Mineralogie, 16. Auflage, F. Euke Verlag 1978, Seiten 739 - 765 beschrieben werden. Montmorillonit-haltige Materialien werden auch als Bentonite oder gelegentlich als Fuller-Erden bezeichnet.

Prinzipiell kommen als Quellen für das Schichtsilikat alle Montmorillonit-haltigen Lagerstätten in Frage wie sie. Zum Beispiel in . "The Economics of Bentonite", 8th Edition 1997, Roskill Information Services Ltd, London genannt sind. Oftmals enthalten die Rohtone neben Montmorillonit noch weitere mineralische und nichtmineralische Bestandteile. An mineralischen Bestandteilen können beispielsweise Quarz, Feldspat, Kaolin, Muskovit, Zeolithe,Calcit und/oder Gips in unterschiedlichen Mengen enthalten sein.

Bevorzugte Schichtsilikate weisen einen hohen Montmorillonit-Gehalt und entsprechend einem geringen Gehalt an Nebenbestandteilen auf. Der Montmorillonit-Gehalt kann über die Bestimmung der Methylenblau-Adsorption nach der Tüpfelmethode gemäß Merkblatt "Bindemittelprüfung/Prüfung von Bindetonen" des Vereins Deutscher Giessereifachleute (VDG, Entwurf P 69 E vom Juni 1998) bestimmt werden, bevorzugte Rohstoffe zeigen einen Methylenblauwert von >250 mg/g, bevorzugt >290 mg/g, insbesondere >320 mg/g. Besonders bevorzugt als Schichtsilikate sind solche, deren austauschfähige Kationen zu einem hohen Prozentsatz aus Alkalimetallen, insbesondere Natrium bestehen. Bezogen auf Ladungsäquivalente enthalten diese Rohstoffe >25% bevorzugt >40% einwertige austauschbare Kationen.

Diese Natrium-Bentonite als Rohstoffe kommen in der Natur vor, bekannte Quellen für Natrium-haltige Bentonite liegen z.B. in Wyoming/USA oder in Indien, sie sind auch nach ihrer Herkunft als "Western Bentonites", "Wyoming bentonites" oder nach den Eigenschaften als "swelling Benonites" bekannt. Bentonite mit einem hohen Anteil an Erdalkali-Kationen, insbesondere Calcium sind beispielsweise als "Subbentonite" oder "Southern Bentonites" bekannt und können durch eine alkalische Aktivierung zu Natrium-haltigen Bentoniten umgesetzt werden. Auch solche alkalisch aktivierten Rohstoffe sind für erfindungsgemäße Katalysatoren geeignet. Schließlich ist es prinzipiell auch möglich, geeignete Rohstoffe synthetisch herzustellen.

Schichtsilikate natürlichen Ursprungs enthalten gelegentlich noch nichtmineralische Verunreinigungen; insbesondere Kohlenstoffverbindungen. Als Katalysatorrohstoff bevorzugt sind solche Bentonite, die einen Gesamt-Kohlenstoffgehalt von <3%, bevorzugt <1 % besonders bevorzugt <0,5% enthalten.

Das Schichtsilikat wird für die Herstellung des erfindungsgemäßen Katalysators säureaktiviert. Dafür wird das Schichtsilikat entweder in stückiger oder in Pulverform in an sich bekannter Weise mit Mineralsäuren wie beispielsweise Salz-, Schwefel- oder Salpetersäure behandelt. Auch möglich ist eine Aktivierung in organischen Säuren, wie Ameisen- oder Essigsäure.

Bereits vom Hersteller säureaktivierte Schichtsilikate auch Tonmineralien genannt werden beispielsweise unter dem Namen "K10" oder "KSF" oder "Tonsil" von der Firma Südchemie vertrieben.

Der erfindungsgemäße Katalysator wird durch Mischen des Übergangsmetalloxid mit dem säureaktivierten Schichtsilikat und gegebenenfalls anschließende Formgebung erhalten. Dazu werden Übergangsmetalloxid und säureaktiviertes Schichtsilikat in einer Mischeinheit, beispielsweise einem Mixmuller oder einem Koller, zusammengegeben und kurz trocken vermischt. Soll der Katalysator als Formkörper wie zum Beispiel als Extrudat oder Tablette eingesetzt werden, wird Wasser und Bindemittel hinzugegeben und mit geeigneten Press oder Formeinrichtungen ausgeformt. Die Herstellung von Formkörpern aus pulverförmigen Rohstoffen ist an sich bekannt und kann beispielsweise durch Tablettierung, Agglomeration oder Extrusion erfolgen, wie sie u.a. im Handbook of Heterogenous Catalysis, Vol. 1, VCH Verlagsgesellschaft Weinheim, 1997, S. 414-417 beschrieben sind. Bei der Verformung können dem Fachmann bekannte Hilfsstoffe wie Binder, Schmierstoffe, Porenbildner und/oder Lösungsmittel zugesetzt werden.

Der Katalysator kann in einer bevorzugten Ausführung durch die Zugabe von einem Lösungsmittel wie beispielsweise Wasser, verdünnten Mineralsäuren, wässrigen Säurelösungen oder organischen Lösungsmitteln, direkt ohne den Einsatz von Bindern, Schmierstoffen oder Porenbildnern verarbeitet werden.

Der Katalysator wird im Allgemeinen bei Temperaturen von 30°C bis 200°C und normalem Druck, gegebenenfalls kann jedoch auch unter vermindertem Druck getrocknet werden. Anschließend kann der Katalysator bei Temperaturen von 150°C bis 800°C, bevorzugt 250°C bis 600°C calciniert werden.

Die erfindungsgemäßen Katalysatoren können für die Polymerisation z.B. in Form von Tabletten, Strängen, Kugeln, Ringen oder Splitt eingesetzt werden. Bevorzugt werden als Formkörper Tabletten, Stränge oder Kugeln verwendet. Bei Kugeln werden Durchmesser von 0,1 bis 10 mm, bevorzugt 0,3 bis 5 mm genutzt. Tabletten werden bevor- ' zugt mit Durchmessern von 1 bis 5 mm und Höhen von 1 bis 3 mm eingesetzt. Bei Strängen (Extrudaten) werden solche mit einem Durchmesser im Bereich 0,5 bis 4 mm, bevorzugt 1 bis 3 mm verwendet. Das Verhältnis von Länge zu Durchmesser der bevorzugten Extrudate beträgt üblicherweise 20:1 bis 0,5:1, bevorzugt 5:1 bis 1:1. Neben zylinderförmigen Extrudaten können beispielsweise auch Hohlstränge, Rippstränge, Sternstränge oder andere dem Fachmann bekannte Extrudatformen eingesetzt werden.

Als Vorbehandlung des Katalysators vor dem Einsatz in der Polymerisations-Reaktion kommen beispielsweise das Trocknen mit auf 80 bis 200°C, bevorzugt auf 100 bis 150°C erwärmten inerten Gasen, wie z.B. Luft oder Stickstoff, in Frage.

Als Telogene eignen sich bei der Herstellung von PTHF-Estern Carbonsäureanhydride und/oder Carbonsäureanhydrid/Carbonsäure-Gemische. Unter diesen sind aliphatische und aromatische Poly- und/oder Monocarbonsäuren bzw. deren Anydride, die 2 bis 12 Kohlenstoffatome enthalten, bevorzugt. Beispiele für bevorzugte Telogene sind Essigsäureanhydrid, Propionsäureanhydrid, Bernsteinsäure- und Maleinsäureanhydrid ggf. in Gegenwart der entsprechenden Säuren. Insbesondere ist Essigsäureanhydrid als Telogen bevorzugt.

Die bei der Verwendung der bevorzugten Telogene entstehenden PTHF-Acetate lassen sich mit verschiedenen Verfahren in PTHF überführen (z.B. wie in der US 4,460,796 angegeben).

Andere Copolymere von THF lassen sich herstellen durch die zusätzliche Verwendung von cyclischen Ethern als Comonomere, die sich ringöffnend polymerisieren lassen, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie 3-Methyltetrahydrofuran, 3,3-Dimethyltetrahydrofuran oder 3,4-Dimethyltetrahydrofuran, wobei 3-Methyltetrahydrofuran besonders bevorzugt ist.

Das Telogen und gewünschtenfalls das Comonomer wird zweckmäßigerweise in THF gelöst der Polymerisation zugeführt. Da das Telogen zum Kettenabbruch bzw. zur Kettenübertragung in der Polymerisation führt, lässt sich über die eingesetzte Telogenmenge das mittlere Molekulargewicht des Polymers steuern. Je mehr Telogen im Reaktionsgemisch enthalten ist, desto niedriger wird das mittlere Molekulärgewicht des PTHF oder des betreffenden PTHF-Derivates. Je nach Telogengehalt der Polymerisationsmischung können PTHF, die betreffenden PTHF-Derivate bzw. THF-Copolymere mit mittleren Molekulargewichten von 250 bis 10000 Dalton gezielt hergestellt werden. Vorzugsweise werden mit dem erfindungsgemäßen Verfahren PTHF, die betreffenden PTHF-Derivate bzw. THF-Copolymere mit mittleren Molekulargewichten von 500 bis 5000 Dalton, besonders bevorzugt von 650 bis 4000 Dalton hergestellt.

Die Polymerisation wird im allgemeinen bei Temperaturen von 0 bis 80°C, vorzugsweise von 25°C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 20 bar, bevorzugt 0,5 bis 2 bar.

Zur Vermeidung der Bildung von Etherperoxiden wird die Polymerisation vorteilhaft unter einer Inertgasatmosphäre vollzogen. Als Inertgase können z.B. Stickstoff, Kohlendioxid oder die Edelgase dienen, bevorzugt wird Stickstoff verwendet.

Besonders vorteilhaft ist die Ausführung der Polymerisation unter einer Wasserstoffatmosphäre. Diese Ausführungsform bewirkt eine besonders niedrige Farbzahl der entstehenden Polymerisate. Der Wasserstoffpartialdruck kann dabei zwischen 0,1 und 50 bar gewählt werden. Durch Dotierung des Polymerisationskatalysators mit Übergangsmetallen oder Mischen des Polymerisationskatalysators mit einem übergangsmetallhaltigen Katalysator kann bei einer Durchführung der Polymerisation in Gegenwart von Wasserstoff die Farbzahl noch weiter verbessert werden. Als Übergangsmetalle dienen die Elemente der Gruppen 7 bis 10 des Periodensystems, beispielsweise Ruthenium, Rhenium, Nickel, Eisen, Kobalt, Palladium und/oder Platin.

Das erfindungsgemäße Verfahren kann diskontinuierlich oder kontinuierlich betrieben werden, wobei aus wirtschaftlichen Gründen in der Regel die kontinuierliche Betriebsweise bevorzugt wird.

Bei der diskontinuierlichen Betriebsweise werden die Reaktanden THF, das betreffende Telogen und/oder gewünschtenfalls das Comonomer und der Katalysator im allgemeinen in einem Rührkessel oder Schlaufenreaktor bei den angegebenen Temperaturen solange umgesetzt, bis der gewünschte Umsatz des THF erreicht ist. Die Reaktionsszeit kann in Abhängigkeit von der zugesetzten Katalysatormenge 0,5 bis 40, vorzugsweise 1 bis 30 Stunden betragen. Die Katalysatoren werden zur Polymerisation im allgemeinen in einer Menge von 1 bis 90 Gew.-%, vorzugsweise von 4 bis 70 Gew.-%, und besonders bevorzugt von 8 bis 60 Gew.-%, bezogen auf das Gewicht des eingesetzten THF, zugesetzt.

Bei der kontinuierlichen Betriebsweise kann die Umsetzung in herkömmlichen, für kontinuierliche Verfahren geeigneten Reaktoren oder Reaktoranordnungen in Suspensions- oder Festbettfahrweise ausgeführt werden, bei Suspensionsfahrweise beispielsweise in Schlaufenreaktoren oder Rührreaktoren und bei Festbettfahrweise in Rohrreaktoren oder Festbettreaktoren, wobei die Festbettfahrweise bevorzugt ist.

In der bevorzugten Festbettfahrweise kann der Polymerisationsreaktor in Sumpffahrweise, d. h. das Reaktionsgemisch wird von unten nach oben geführt, oder in Rieselfahrweise, d. h. das Reaktionsgemisch wird von oben nach unten durch den Reaktor geführt, betrieben werden. Das Eduktgemisch (Feed) aus THF und Telogen und/oder Comonomer wird dem Polymerisationsreaktor kontinuierlich zugeführt, wobei die Katalysatorbelastung 0,01 bis 2,0 kg THF/(1*h), bevorzugt 0,02 bis 1,0 kg THF/(1*h) und besonders bevorzugt 0,04 bis 0,5 kg THF/(1*h)beträgt.

Weiterhin kann der Polymerisationsreaktor im geraden Durchgang, d. h. ohne Produktrückführung, oder im Umlauf, d. h. ein Teil des den Reaktor verlassenden Polymerisationsgemischs wird im Kreislauf geführt, betrieben werden. Bei der Umlauffahrweise beträgt das Verhältnis von Umlauf zu Zulauf kleiner oder gleich 150 : 1, bevorzugt kleiner 100 : 1 und bevorzugt kleiner 60 : 1.

Die Konzentration des als Telogen eingesetzten Carbonsäureanhydrids in dem dem Polymerisationsreaktor zugeführten Eduktgemisch liegt zwischen 0,03 bis 30 mol.-%, bevorzugt bei 0,5 bis 20 mol.-%, besonders bevorzugt bei 1 bis 12 mol.-%, bezogen auf das eingesetzte THF.

Wird zusätzlich eine Carbonsäure verwendet, so beträgt das Molverhältnis im Feed üblicherweise 1: 20 bis 1 : 20000, bezogen auf eingesetztes Carbonsäureanhydrid.

Werden zusätzlich Comonomere verwendet, so beträgt das Molverhältnis im Feed üblicherweise 0,1 bis 60, bevorzugt 0,5 bis 50, besonders bevorzugt 2 bis 40 mol.-%, bezogen auf eingesetztes THF.

Wurde die Polymerisation in Suspensionsfahrweise durchgeführt, ist es zur Aufarbeitung des Polymerisationsaustrags erforderlich, den überwiegenden Teil des Polymerisationskatalysator beispielsweise durch Filtration, Dekantieren oder Zentrifugieren vom Polymerisationsgemisch abzutrennen und den erhaltenen Polymerisationsaustrag der weiteren Aufarbeitung zuzuführen. In der bevorzugten Festbettfahrweise wird der Polymerisationsaustrag direkt weiter aufgearbeitet.

Die Aufarbeitung der besonders bevorzugten PTHF-Acetate bzw. THF-Copolymer-Acetate kann nach an sich bekannten Methoden erfolgen. Beispielsweise wird nach destillativer Abtrennung von nicht umgesetztem THF und gegebenenfalls Essigsäureanhydrid, Essigsäure und Comonomer das erhaltene PTHF-Acetat bzw. THF-Copolymer-Acetat basenkatalysiert mit Methanol zu PTHF bzw. THF-Copolymer und Methylacetat umgeestert.

Gewünschtenfalls kann anschließend niedermolekulares PTHF und/oder Tetrahydrofurancopolymer eines mittleren Molekulargewichts von 200 bis 700 Dalton destillativ abgetrennt werden. Üblicherweise können hierbei auch niedermolekulare cyclische Oligomere destillativ abgetrennt werden. Als Destillationsrückstand verbleibt PTHF bzw. THF-Copolymer mit mittleren Molekulargewichten von 650 bis 10.000 Dalton.

Die erfindungsgemäßen Katalysatoren können nach Einsatz in einem diskontinuierlich oder kontinuierlich betriebenen PTHF-Verfahren regeneriert werden, beispielsweise durch Temperaturbehandlung, wie in der EP-A-0 535 515 beschrieben, und/oder durch Waschen des Katalysators mit wässrigen und/oder organischen Lösungsmitteln.

### Beispiele

### Beispiel 1

201,2g aktivierte Bleicherde K10 der Firma Südchemie wurde mit 1,01 g (entsprechend 0,5 Gew.-%) Fe₂O₃ der Firma Thyssen-Krupp, Typ HP, in einem Koller vermengt und mit 0,75 ml Wasser pro Gramm trockenen Materials zu Extrudaten verarbeitet und bei 120°C getrocknet, anschließend bei 450°C kalziniert.

### Beispiel 2

196,1 g aktivierte Bleicherde K10 der Firma Südchemie wurde mit 6,1 g (entsprechend 3 Gew.-%) Fe₂O₃ der Firma Thyssen-Krupp, Typ HP, in einem Koller vermengt und mit 0,75 ml Wasser pro Gramm trockenen Materials zu gleichgroßen Extrudaten gleicher Form wie in Beispiel 1 verarbeitet und bei 120°C getrocknet, anschließend bei 450°C kalziniert.

### Beispiel 3

194 g aktivierte Bleicherde K10 der Firma Südchemie wurde mit 8,1 g (entsprechend 4 Gew.-%) Fe₂O₃ der Firma Thyssen-Krupp, Typ HP, in einem Koller vermengt und mit 0,75 ml Wasser pro Gramm trockenen Materials zu gleichgroßen Extrudaten gleicher Form wie in Beispiel 1 verarbeitet und bei 120°C getrocknet, anschließend bei 450°C kalziniert.

### Beispiel 4

99,5 g aktivierte Bleicherde K10 der Firma Südchemie wurde mit 0,5 g (entsprechend 0,5 Gew.-%) Co₃O₄ der Firma Thyssen-Krupp, Typ HP, in einem Koller vermengt und mit 0,89 ml Wasser pro Gramm trockenen Materials zu gleichgroßen Extrudaten gleicher Form wie in Beispiel 1 verarbeitet und bei 120°C getrocknet , anschließend bei 450°C kalziniert.

### Vergleichsbeispiel 1

200 g aktivierte Bleicherde K10 der Firma Südchemie wurde mit 0,75 ml Wasser pro Gramm trocknen Materials zu gleichgroßen Extrudaten gleicher Form wie in Beispiel 1 analog verarbeitet.

### Beispiel 5: Kontinuierliche Poylmersiation

In einer Laborapparatur wurde jeweils unter Schutzgas eine Mischung aus 150 g THF und 14,8 g Essigsäureanhydrid bei 50°C mit 1 l/h im Kreis über 22 g getrockneten ausgeformter Katalysator. Nach 30, 60, 90 und 120 Minuten wird der Brechungsindex der Reaktionsflüssigkeit mit einem Refraktometer der Firma THG Glock Instruments (DR-122 Refraktometer, Nd 1,3800 - 1,4535) bestimmt. Durch Auswertung der zeitlichen Abhängigkeit der PTHF-Diacetat-Bildung wird über Extrapolation die Anfangsproduktivität des Katalysator-Extrudats bestimmt.

Die Ergebnisse sind für die vorgenannten Katalysatoren in Tabelle 1 zusammengestellt

**Tabelle 1:**

| Katalysator | Aktivität in g_{PTHF}/kg_{Kat}/h |
|---|---|
| Beispiel 1 | 2.176 |
| Beispiel 2 | 1.633 |
| Beispiel 3 | 1.889 |
| Beispiel 4 | 1.322 |
| Vergleichsbeispiel 1 | 1.244 |

### Beispiel 6: Kontinuierliche Polymerisation

61,5 g/h THF und 2,5 g/h Essigsäureanhydrid wurden mit Hilfe einer Pumpe bei 40°C durch einen Rohrreaktor über 200 ml = ca. 118 g des Katalysators nach Beispiel 1 im Kreis geführt. Das konstante Umlauf:Zulauf-Verhältnis betrug 15:1. In jeder Stunde wurden weitere 64 g der Polymerisationsmischung in den Reaktor eingetragen, während die gleiche Menge Produktmischung aus dem Kreislauf entnommen wurde. Zur Analyse wurden die leichtflüchtigen Anteile des Reaktionsaustrags, d.h. im wesentlichen unumgesetztes THF und Essigsäureanhydrid, im Vakuum bei zunächst 70°C und 30 mbar, dann bei 170°Cund 0,3 mbar verdampft. Der Umsatz wurde durch Vergleich des Eindampfrückstandes zu den Einsatzstoffen zu 52% (bezogen auf die Masse der Einsatzstoffe) bestimmt.

### Vergleichsbeispiel 2

61,5 g/h THF und 2,5 g/h Essigsäureanhydrid wurden mit Hilfe einer Pumpe bei 40°C durch einen Rohrreaktor über 200 ml des Katalysators gemäß Vergleichsbeispiel 1 geführt. Das konstante Umlauf:Zulauf-Verhältnis betrug 15:1. In jeder Stunde wurden weitere 64 g der Polymerisationsmischung in den Reaktor eingetragen, während die gleiche Menge Produktmischung aus dem Kreislauf entnommen wurde. Zur Analyse wurden die leichtflüchtigen Anteile des Reaktionsaustrags, d.h. im wesentlichen unumgesetztes THF und Essigsäureanhydrid, im Vakuum bei zunächst 70°C und 30 mbar, dann bei 170°C und 0,3 mbar verdampft. Der Umsatz durch Vergleich des Eindampfrückstandes zu den Einsatzstoffen wurde zu 43% (bezogen auf die Masse der Einsatzstoffe) bestimmt.

## Patentansprüche

1. Verfahren zur Herstellung von Polytetrahydrofuran, Polytetrahydrofuran-Copolymeren, Diestern oder Monoestern dieser Polymere, **dadurch gekennzeichnet, dass** Tetrahydrofuran in Gegenwart mindestens eines Telogens und/oder Comonomeren an einem Katalysator, der durch trockenes Vermischen eines säureaktivierten Schichtsilikats und eines Übergangmetalloxids der Gruppen 8 und/oder 9 des Periodensystems hergestellt wird.

2. Verfahren nach Anspruch 1, **dadurch gekennzeichnet, dass** der Katalysator als Formkörper verwendet wird, der durch Zugabe von Wasser und Bindemittel nach dem trockenen Vermischen des Übergangsmetalloxids und des Schichtsilikats und anschließendem Verformen mit Formeinrichtungen hergestellt wird.

3. Verfahren nach einem der Ansprüche 1 oder 2, **dadurch gekennzeichnet, dass** das Übergangsmetalloxid in einer Menge von 0,5 bis zu 10 Gew.-%, bezogen auf das Schichtsilikat, enthalten ist.

4. Verfahren nach einem der Ansprüche 1 bis 3, **dadurch gekennzeichnet, dass** das Übergangsmetalloxid ausgewählt ist aus Eisen(III)oxid und/oder Cobalt(II, III)oxid.

5. Verfahren nach einem der Ansprüche 1 bis 4, **dadurch gekennzeichnet, dass** Eisenoxid in einer Menge 0,5 Gew.-% oder 3 bis 4 Gew.-% Eisen(III)oxid, bezogen auf das Schichtsilikat, enthalten ist.

6. Verfahren nach einem der Ansprüche 1 bis 5, **dadurch gekennzeichnet, dass** Cobalt (II, III)oxid in einer Menge von 0,5 bis 10 Gew.-% bezogen auf das Schichtsilikat, enthalten ist.

7. Verfahren nach einem der Ansprüche 1 bis 6, **dadurch gekennzeichnet, dass** das Eisen(III)oxid, das bei einer Temperatur von 700 bis 1200°C calciniert wurde, verwendet wird.

8. Verfahren nach einem der Ansprüche 1 bis 7, **dadurch gekennzeichnet, dass** das säureaktivierte Schichtsilikat ausgewählt ist aus der Montmorrillonit-Saponitgruppe oder Palygorskit-Sepiolith-Gruppie ist.

9. Verfahren nach Anspruch 8, **dadurch gekennzeichnet, dass** das säureaktivierte Schichtsilikat einen hohen Montmorrillonitgehalt, entsprechend einem Methylenblauwert > 250 mg/g, aufweist oder aus Montmorrillonit besteht.

10. Verfahren nach Anspruch 9, **dadurch gekennzeichnet, dass** das säureaktivierte Schichtsilikat ein Bentonit ist.

11. Verfahren nach Anspruch 10, **dadurch gekennzeichnet, dass** der Bentonit einen Gesamt-Kohlenstoffgehalt von kleiner 3 Gew.-% aufweist.

## Claims

1. A process for preparing polytetrahydrofuran, polytetrahydrofuran copolymers, diesters or monoesters of these polymers, wherein tetrahydrofuran is polymerized in the presence of at least one telogen and/or comonomer over a catalyst which is produced by dry mixing of an acid-activated sheet silicate and a transition metal oxide of groups 8 and/or 9 of the Periodic Table.

2. The process according to claim 1, wherein the catalyst is used as a shaped body which is produced by adding water and binder after the dry mixing of the transition metal oxide and the sheet silicate and subsequent shaping by means of shaping apparatuses.

3. The process according to either of claims 1 or 2, wherein the transition metal oxide is comprised in an amount of from 0.5 to 10% by weight, based on the sheet silicate.

4. The process according to any of claims 1 to 3, wherein the transition metal oxide is selected from among iron(III) oxide and cobalt(II, III) oxide.

5. The process according to any of claims 1 to 4, wherein iron oxide is comprised in an amount of 0.5% by weight or from 3 to 4% by weight of iron(III) oxide, based on the sheet silicate.

6. The process according to any of claims 1 to 5, wherein cobalt(II, III) oxide is comprised in an amount of from 0.5 to 10% by weight, based on the sheet silicate.

7. The process according to any of claims 1 to 6, wherein iron(III) oxide which has been calcined at a temperature of from 700 to 1200°C is used.

8. The process according to any of claims 1 to 7, wherein the acid-activated sheet silicate is selected from the montmorillonite-saponite group or palygorscitesepiolite group.

9. The process according to claim 8, wherein the acid-activated sheet silicate has a high montmorillonite content corresponding to a methylene blue value of > 250 mg/g or consists of montmorillonite.

10. The process according to claim 9, wherein the acid-activated sheet silicate is a bentonite.

11. The process according to claim 10, wherein the bentonite has a total carbon content of less than 3% by weight.

## Revendications

1. Procédé de préparation de polytétrahydrofuranne, de copolymères de polytétrahydrofuranne, de diesters ou de monoesters de ces polymères, **caractérisé en ce qu'**on polymérise du tétrahydrofuranne en présence d'au moins un télogène et/ou de comonomères sur un catalyseur, qui est préparé par mélange à sec d'un silicate à couches activé par un acide et d'un oxyde de métal de transition du 8ème et/ou du 9ème groupe du système périodique.

2. Procédé selon la revendication 1, **caractérisé en ce que** le catalyseur est utilisé sous forme de corps façonné, qui a été préparé par addition d'eau et de liant après le mélange à sec de l'oxyde de métal de transition et du silicate à couches et façonnage consécutif avec des dispositifs de moulage.

3. Procédé selon l'une quelconque des revendications 1 ou 2, **caractérisé en ce que** l'oxyde de métal de transition est contenu en une quantité de 0,5 à 10% en poids, par rapport au silicate à couches.

4. Procédé selon l'une quelconque des revendications 1 à 3, **caractérisé en ce que** l'oxyde de métal de transition est choisi parmi l'oxyde de fer (III) et/ou l'oxyde de cobalt (II, III).

5. Procédé selon l'une quelconque des revendications 1 à 4, **caractérisé en ce que** de l'oxyde de fer est contenu en une quantité de 0,5% en poids ou de 3 à 4% en poids d'oxyde de fer (III), par rapport au silicate à couches.

6. Procédé selon l'une quelconque des revendications 1 à 5, **caractérisé en ce que** de l'oxyde de cobalt (II, III) est contenu en une quantité de 0,5 à 10% en poids, par rapport au silicate à couches.

7. Procédé selon l'une quelconque des revendications 1 à 6, **caractérisé en ce qu'**on utilise l'oxyde de fer (III) qui a été calciné à une température de 700 à 1200°C.

8. Procédé selon l'une quelconque des revendications 1 à 7, **caractérisé en ce que** le silicate à couches activé par de l'acide est choisi dans le groupe de montmorillonite-saponite ou le groupe de palygorskite-sépiolite.

9. Procédé selon la revendication 8, **caractérisé en ce que** le silicate à couches activé par un acide présente une teneur élevée en montmorillonite, correspondant à une valeur de bleu de méthylène > 250 mg/g, ou est constitué par de la montmorillonite.

10. Procédé selon la revendication 9, **caractérisé en ce que** le silicate à couches activé par un acide est une bentonite.

11. Procédé selon la revendication 10, **caractérisé en ce que** la bentonite présente une teneur totale en carbone inférieure à 3% en poids.
